# EUROPÄISCHE PATENTSCHRIFT

(11) **EP 2 898 246 B1**
(45) Veröffentlichungstag und Bekanntmachung des Hinweises auf die Patenterteilung: **22.05.2019**
(21) Anmeldenummer: 13770664.4
(22) Anmeldetag: 24.09.2013
(51) Int. Cl.: F16K 31/50, F16K 31/53, F16K 1/06, F16K 1/12, F16K 1/52, F16K 1/54

(54) **DREIDIMENSIONALES STRÖMUNGSOPTIMIERTES REGELSCHIEBERSYSTEM MIT LINEAREM REGELVERHALTEN**
THREE-DIMENSIONAL FLOW OPTIMISED CONTROL VALVE SYSTEM WITH LINEAR CONTROL CHARACTERISTICS
VANNE DE COMMANDE DE ÉCOULEMENT TRIDIMENSIONNEL OPTIMISÉE AVEC DES CARACTERISTIQUES DE COMMANDE LINÉAIRE

(30) Priorität: 24.09.2012 DE 102012018763
(43) Veröffentlichungstag der Anmeldung: 29.07.2015
(73) Patentinhaber: Binder GmbH, 89081 Ulm (DE)
(72) Erfinder: BINDER, Robert, 89150 Laichingen (DE)
(74) Vertreter: Witte, Weller & Partner Patentanwälte mbB
(86) Internationale Anmeldenummer: PCT/EP2013/069773
(87) Internationale Veröffentlichungsnummer: WO 2014/044861

(56) Entgegenhaltungen:
- EP-A1- 1 092 834
- EP-A1- 1 512 892
- EP-A1- 2 463 558
- EP-A2- 0 301 578
- US-A- 3 180 360
- US-A- 3 317 184
- US-A- 3 520 324
- US-A- 4 593 881
- US-A- 5 782 410
- US-A1- 2008 111 089

## Beschreibung

Die vorliegende Erfindung betrifft eine Regulierschieber-Vorrichtung mit einem Gehäuse, das einen von einem gasförmigen oder flüssigen Medium durchströmbaren Kanal bildet und zumindest einen Einlauf-Längsabschnitt und einen Auslauf-Längsabschnitt aufweist, und einem verstellbaren Regelelement, um den Störungsquerschnitt des Kanals zu verändern und die Durchflussmenge einzustellen. Eine solche Vorrichtung ist zum Beispiel aus der EP-A-2 463 558 bekannt.

Derartige Regulierschieber-Vorrichtungen werden beispielsweise für die Regelung der Belüftung in Kläranlagen eingesetzt. Da ca. 60 % des Energieverbrauchs von Kläranlagen für die Belüftung der Klärbecken aufgewendet werden muss, besteht gerade hier ein großes Potential, den Energieverbrauch zu reduzieren.

Die Aufgabe der vorliegenden Erfindung besteht deshalb darin, den Energieverbrauch der Belüftung von Klärbecken einer Kläranlage zu reduzieren. Insbesondere besteht eine Aufgabe darin, die zur Belüftungssteuerung benötigten Regelkomponenten energetisch zu optimieren.

Diese Aufgabe wird von einer Regulierschieber-Vorrichtung nach dem unabhängigen Anspruch 1 gelöst.

Im Gegensatz zu den bisher zur Belüftungsregelung eingesetzten Plattenschieberventilen, die den durchströmbaren Kanal durch Verlagern einer Platte senkrecht zur Strömungsrichtung verändern, lassen sich mit der erfindungsgemäßen Lösung die Druckverluste in der Regelstrecke deutlich reduzieren, so dass sich dadurch Energiekosten einsparen lassen. Darüber hinaus wird mit der erfindungsgemäßen Regulierschieber-Vorrichtung bevorzugt ein lineares Regelverhalten zwischen der Stellgröße und dem zu regulierenden Luft-Massenstrom über den gesamten Arbeitsbereich zur Verfügung gestellt.

Anders als bei Plattenschieberventilen, die senkrecht zur Strömungsrichtung verlagert werden, erfolgt die Verstellung des Regelelements in Strömungsrichtung, wobei beim Öffnen ein Ringspalt zwischen Regelelement und Sitzringelement entsteht und damit einen Luftstrom vom Einlauf-Längsabschnitt in den Auslauf-Längsabschnitt ermöglicht. Die Verwirbelungen im Bereich dieses Ringspalts sind im Gegensatz zu einem bisher verwendeten Plattenschieberventil deutlich reduziert, so dass sich geringere Druckverluste einstellen.

Das lineare Regelverhalten ergibt sich dabei durch die spezifische Ausgestaltung einer Außenkontur des Regelelements, die zusammen mit dem Sitzringelement die Größe des Ringspalts definiert. Bevorzugt ist die Außenkontur des Regelelements einstellbar. Sie kann dann auf die Betriebssituation angepasst bzw. abgestimmt werden.

Bei einer bevorzugten Ausgestaltung weist der Auslauf-Längsabschnitt eine im Längsschnitt gesehen konische Form auf, derart, dass die Strömungsquerschnittsfläche des Kanals in Strömungsrichtung zunimmt.

Diese Maßnahme führt zu einer weiteren Reduzierung der Druckverluste innerhalb der Regulierschieber-Vorrichtung, so dass hierdurch der Energieverbrauch weiter reduziert werden kann. Insbesondere ermöglicht diese Maßnahme einen besseren Druckaufbau und damit Druckrückgewinnung nach dem Druckverlust am Ringspalt.

Nach der Erfindung sind im Einlauf-Längsabschnitt Strömungsleitbleche vorgesehen, die die Strömung zusätzlich konditionieren.

Bevorzugt wird das Regelelement im Bereich des Einlauf-Längsabschnitts angeordnet und wird zum Öffnen gegen die Strömungsrichtung verschiebbar gehalten. Weiter bevorzugt weist das Regelelement eine strömungsoptimierte Außenkontur auf, die einen Hohlraum umschließt. Vorzugsweise ragt in den Hohlraum ein Ende einer Abtriebswelle, deren anderes Ende in einem Getriebegehäuse liegt, das im Auslauf-Längsabschnitt angeordnet ist. Bevorzugt ist die äußere Form des Getriebegehäuses strömungsoptimiert ausgestaltet.

Sowohl das Regelelement als auch das Getriebegehäuse liegen zentriert innerhalb des Kanals und werden damit von der durch den Kanal strömenden Luft umflossen. Durch eine strömungsoptimierte Formgebung dieser beiden Elemente lassen sich Druckverluste und damit Energieverluste weiter reduzieren, weil die Strömung gezielt an die begrenzende Innenwandung des Auslauf-Längsabschnitts geführt wird. Die Innenwandung des Auslauf-Längsabschnitts hat bevorzugt einen Öffnungswinkel von 10° oder weniger, weiter bevorzugt von 5° bis 6°.Das Regelelement sowie das Getriebegehäuse können mehrteilig, insbesondere aus mehreren Segmenten, ausgebildet sein, so dass die optimale Form fertigungstechnisch leichter umsetzbar ist.

Bevorzugt ist innerhalb des Getriebegehäuses ein Winkeltrieb vorgesehen, um eine Antriebswelle, die schräg zur Längsachse in das Getriebegehäuse geführt ist, mit der Abtriebswelle zu koppeln. Bevorzugt verläuft die Abtriebswelle innerhalb eines Wellengehäuses, welches sich von dem Regelelement zu dem Getriebegehäuse erstreckt. Bevorzugt ist die Abtriebswelle innerhalb des Regelelements mit einem Umsetzelement gekoppelt, derart, dass eine Drehbewegung der Abtriebswelle in eine translatorische Bewegung des Regelelements umgesetzt wird. Die Antriebsachse ist bevorzugt mit einem hydraulischen, pneumatischen oder elektrischen Stellmotor gekoppelt.

Diese Maßnahmen führen insgesamt zu einer weiteren Verbesserung des Energieverbrauchs, da innerhalb des Kanals eine Einheit aus Regelelement, Wellengehäuse und Getriebegehäuse entsteht, die sehr reibungsarm von der durchströmenden Luft umflossen wird.

Bei einer bevorzugten Weiterbildung umfasst das Umsetzelement ein Gewindespindelelement. Hierbei handelt es sich um eine besonders einfache und effektive Möglichkeit, eine Drehbewegung in eine translatorische Bewegung umzusetzen.

Besonders bevorzugt umfasst das Umsetzelement neben dem Gewindespindelelement ein Spielnachstellungselement, so dass auftretender Verschleiß im Gewindespindelelement ausgeglichen werden kann.

Nach der Erfindung ist an beiden Enden des Gehäuses jeweils ein Flansch angeordnet. Weiter bevorzugt sind die Rohrdurchmesser der Enden an die gängigen Durchmesser von Rohrleitungen angepasst.

Dies hat den Vorteil, dass die Regulierschieber-Vorrichtung sehr einfach in bestehende Rohrleitungen eingesetzt werden kann.

Bei einer bevorzugten Weiterbildung ist innerhalb des Einlauf-Längsabschnitts zumindest ein Sensorelement vorgesehen.

Durch die besondere Ausgestaltung des Einlauf-Längsabschnitts und des Regelelements ergeben sich sehr geringe Verwirbelungen und in Umfangsrichtung innerhalb des Kanals sehr gleichmäßige homogene Strömungsverhältnisse, unabhängig vom Öffnungsgrad des Regelelements. Damit lässt sich eine sehr genaue und zuverlässige Messung, beispielsweise des Drucks und/oder der Strömung, vornehmen.

Besonders bevorzugt sind zumindest drei Führungselemente vorgesehen, die in Umfangsrichtung des Kanals gleichmäßig verteilt sind und darüber hinaus ebenfalls eine strömungsoptimierte Form besitzen.

Weitere Vorteile und Ausgestaltungen der Erfindung ergeben sich aus der Beschreibung und der beiliegenden Zeichnung. Dabei zeigen:
- Fig. 1: eine perspektivische Darstellung einer Regulierschieber-Vorrichtung;
- Fig. 2: die Regulierschieber-Vorrichtung von Fig. 1 mit einigen entfernten Komponenten in einer Art Explosionsdarstellung;
- Fig. 3: die Regulierschieber-Vorrichtung gemäß Fig. 1 mit entferntem Flansch;
- Fig. 4: eine Schnittdarstellung der Regulierschieber-Vorrichtung;
- Fig. 5: eine schematische perspektivische Darstellung einer Baugruppe der Regulierschieber-Vorrichtung, und
- Fig. 6: eine schematische Darstellung einer Kläranlage.

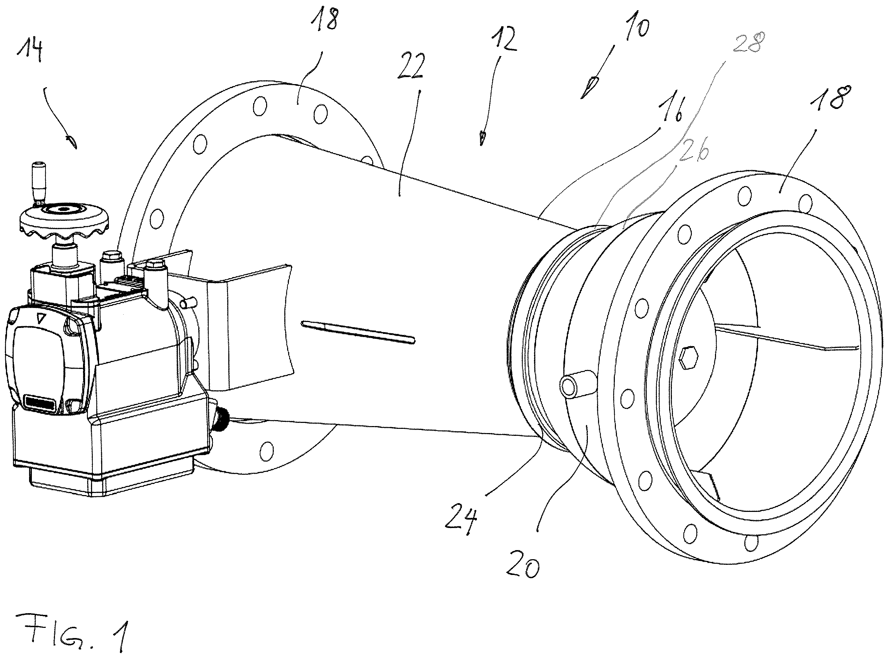

Fig. 1 zeigt eine Regulierschieber-Vorrichtung, die mit dem Bezugszeichen 10 gekennzeichnet ist. Die Regulierschieber-Vorrichtung 10 (nachfolgend kurz Regulierschieber genannt) umfasst eine Strömungskanalkomponente 12 und eine Armaturkomponente 14, wobei die Strömungskanalkomponente 12 in ein Belüftungsrohr eingesetzt wird, welches Luft beispielsweise in ein Klärbecken einer Kläranlage führt. Die Armaturkomponente ist mit der Strömungskanalkomponente mechanisch verbunden und dient dazu, ein noch zu erläuterndes Element in der Strömungskanalkomponente verstellen zu können.

Die Strömungskanalkomponente 12 besitzt ein Gehäuse 16, das an seinen beiden Längsenden jeweils einen Flansch 18 trägt, so dass die Strömungskanalkomponente 12 in eine Rohrleitung einfach eingebaut werden kann.

Das Gehäuse 16 gliedert sich in mehrere Gehäuse- Längsabschnitte, nämlich einen Einlauf-Längsabschnitt 20, und einen Auslauf-Längsabschnitt 22. Zwischen diesen beiden Längsabschnitten ist ein weiterer Längsabschnitt 24 vorgesehen, in dessen Bereich eine Einstellung der Luftmenge erfolgt, die die Strömungskanalkomponente von der Einlaufseite zur Auslaufseite durchströmt. Bevorzugt sind diese drei Gehäuse-Längsabschnitte als separate Gehäuseteile vorgesehen.

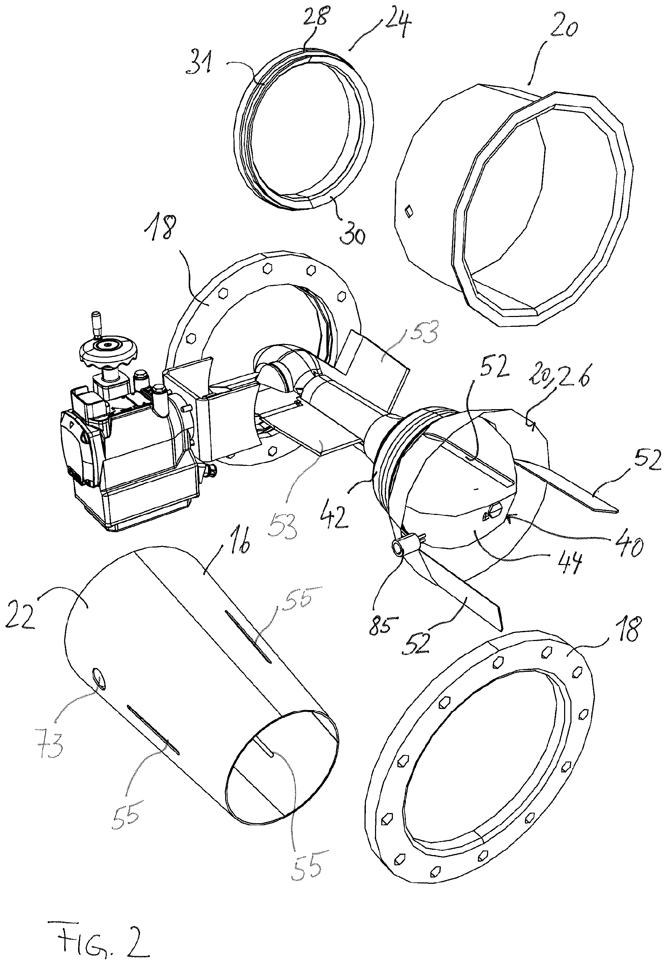

Aus der Fig. 1 ist zu erkennen, dass der Auslauf-Längsabschnitt zylindrisch ausgebildet ist, wobei der Durchmesser sich in Strömungsrichtung vergrößert, so dass eine konische Form entsteht. In Fig. 2 ist diese konische Form des Auslauf-Längsabschnitts 22 nochmals deutlicher zu erkennen.

Der Einlauf-Längsabschnitt 20 ist wie der Auslauf-Längsabschnitt 22 rotationssymmetrisch ausgestaltet und besitzt einen sich in Richtung des Längsabschnitts 24 hin verjüngenden Abschnitt 26.

Der dritte Längsabschnitt 24 dient als Sitzring 28, der eine Außenkontur 31 besitzt, die mit dem verjüngenden Abschnitt 26 des Einlauf-Längsabschnitts zusammenwirkt. Das vordere Ende des Abschnitts 26 wird auf den Längabschnitt 24 gesteckt, so dass dieses Ende des Abschnitts 26 dichtend an der Außenkontur 31 anliegt.

Der Sitzring 28 weist, wie in Fig. 2 zu erkennen ist, eine weitere Ringfläche 30 auf, die als Sitz für ein Regelelement dient, das in Fig. 2 allgemein mit dem Bezugszeichen 40 gekennzeichnet ist.

Das Regelelement 40 ist bevorzugt rotationssymmetrisch zu der Längsachse aufgebaut und gliedert sich in mehrere Abschnitte, nämlich einen Ventilabschnitt 42 und einen etwa halbkugelförmigen Abschnitt 44. Der Ventilabschnitt 42 besitzt in Längsrichtung gesehen eine Außenkontur mit stufenweise oder kontinuierlich variierendem Durchmesser, wobei sich die Durchmesser in Richtung des Sitzrings 28 reduzieren. Der größte Durchmesser ist in einem Bereich benachbart zum halbkugelförmigen Abschnitt 44 und ist an den Durchmesser der Ringfläche 30 des Sitzrings 28 angepasst. Die Ringfläche 30 ist sozusagen als Ventilsitz für den Ventilabschnitt 42 ausgelegt.

Das Regelelement 40 lässt sich in Längsrichtung verschieben, derart, dass sich der Ventilabschnitt 42 gegenüber dem Sitzring 28 und damit der Ringfläche 30 bewegt. In dem in Fig. 2 gezeigten Ausführungsbeispiel erfolgt eine Verlagerung gegen die Strömungsrichtung nach rechts, so dass sich der Ventilabschnitt 42 aus seinem Sitz auf der Ringfläche 30 bewegt und einen Ringspalt öffnet. Der Ringspalt wird also zwischen der Ringfläche 30 des Sitzrings 28 und dem gegenüberliegenden Bereich des Ventilabschnitts 42 gebildet.

Die Größe dieses Ringspalts, d.h. die Fläche des durchströmten Querschnitts, nimmt mit der Verlagerung des Regelelements 40 nach rechts zu, da die Durchmesser des Ventilabschnitts 42 kleiner werden und damit der Abstand zu der gegenüberliegenden Ringfläche 30 größer wird.

Durch das Zusammenwirken des Sitzrings 28 und des verlagerbaren Ventilabschnitts 42 des Regelelements 40 lässt sich folglich die durchströmbare Querschnittsfläche verändern und damit eine Durchflussmengen-Steuerung und/oder. - Regelung realisieren.

Die Änderung der durchströmbaren Querschnittsfläche des Ringspalts ist bevorzugt linear bezogen auf den Verstellweg, d.h. die Verstellung des Regelelements in Längsrichtung. Diese Linearität lässt sich durch entsprechende Wahl der verschiedenen Durchmesser des Ventilabschnitts 42 erreichen. Insbesondere werden die Durchmesser so gewählt, dass sich der Volumenstrom durch den Ringspalt unter Berücksichtigung des dynamischen Anlagendruckverlusts nahezu linear zu der Verstellung des Regelelements entlang des Verstellwegs verhält. Die verschiedenen Durchmesser lassen sich berechnen.

In einer bevorzugten Ausführungsform ist die Außenkontur des Ventilabschnitts 42 einstellbar ausgebildet, so dass die verschiedenen Durchmesser angepasst werden können.

Fig. 2 lässt noch erkennen, dass mehrere, bevorzugt drei Leitbleche bzw. Strömungsleitbleche 52 innerhalb des Einlauf-Längsabschnitts 20 vorgesehen sind. Diese Leitbleche 52 sind an der Innenseite des Einlauf-Längsabschnitts 20 angebracht und erstrecken sich bevorzugt radial nach innen. Die Verteilung der mehreren Leitbleche 52 erfolgt gleichmäßig in Umfangsrichtung.

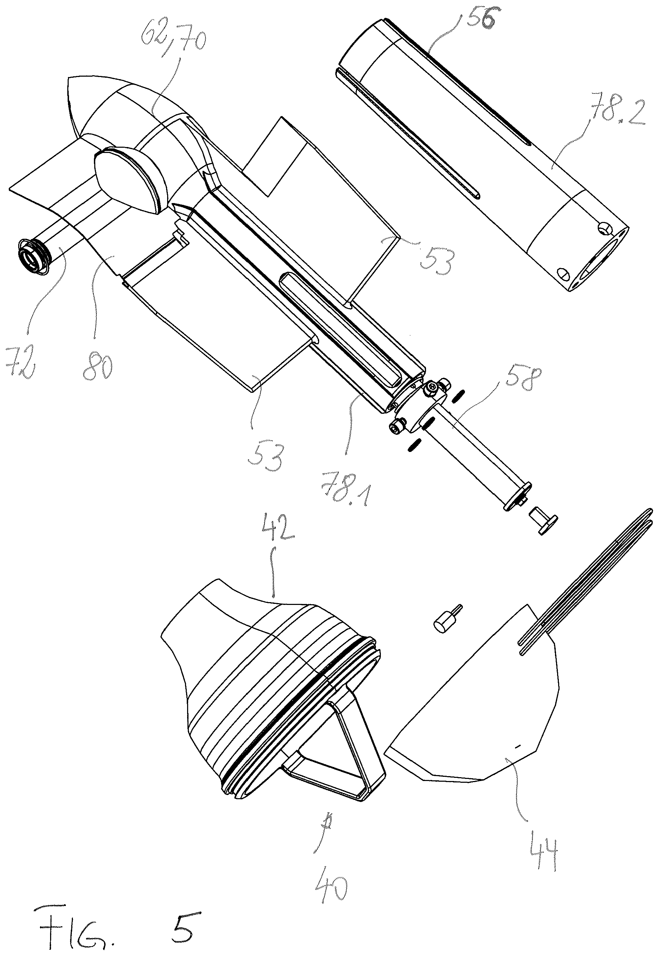

Innerhalb des Gehäuses 16, insbesondere innerhalb des Auslauf-Längsabschnitts 22 sind weitere Leitbleche 53 vorgesehen, die sich von der Innenseite des Auslauf-Längsabschnitts 22 radial nach Innen erstrecken. In Fig. 2 sind im Gehäuse 16, d.h. im Auslauf-Längsabschnitt 22 Schlitze 55 eingebracht, in die die Leitbleche 53 eingreifen können. Die jeweilige radial innen liegende Seite eines Leitbleche 53 ist mit einem inneren Wellengehäuse verbunden, das später mit Bezug auf die Fig. 5 noch erläutert werden wird. Diese Leitbleche sorgen auch für eine Fixierung und Verdrehsicherung des Wellengehäuses gegenüber dem Gehäuse 16.

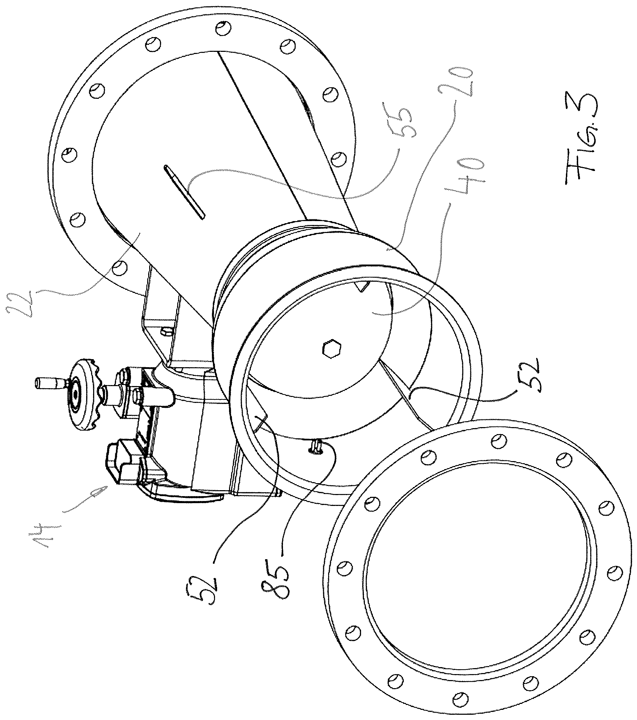

Fig. 3 zeigt den Einlauf-Längsabschnitt 20 nochmals aus einer etwas anderen Perspektive. Gut zu erkennen sind dabei die Leitbleche 52, die radial nach innen ragen und sich zudem in Längsrichtung hin zum Regelelement 40 erstrecken.

Im Einlauf-Längsabschnitt ist auch ein Sensor 85, insbesondere ein Messfühler 85 vorgesehen, der durch eine Öffnung im Einlauf-Längsabschnitt in den inneren Raum hineinragt.

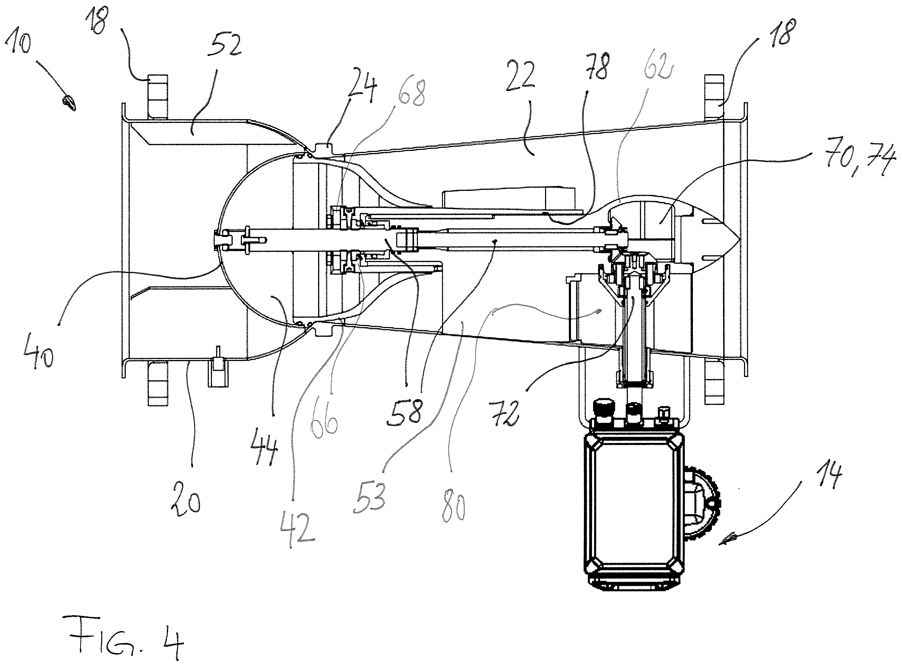

Mit Bezug auf die Fig. 4 wird nachfolgend der Antrieb beschrieben, um das Regelelement 40 in Längsrichtung zu verstellen.

Die Fig. 4 zeigt den Regulierschieber 10 als Schnittdarstellung, wobei die Schnittebene parallel zur Längsachse verläuft.

Zunächst ist aus der Fig. 4 deutlich zu erkennen, dass das Regelelement 40 hohl ausgebildet ist und verschiedene Elemente im Hohlraum aufnimmt. In diesen Hohlraum des Regelelements 40 ragt beispielsweise ein Ende einer Abtriebswelle 58, die sich zentrisch zu den beiden Längsabschnitten 20 und 22 erstreckt und dessen anderes Ende in einem Getriebegehäuse 62 endet.

Innerhalb des Hohlraums des Regelelements 40 ist bevorzugt eine Gewindespindel 66 vorgesehen, die dazu ausgelegt ist, eine Drehbewegung der Abtriebswelle 58 in eine translatorische Bewegung des Regelelements 40 in Längsrichtung umzusetzen. Die Abtriebswelle 58 weist hierfür einen Gewindeabschnitt auf, der mit einer Spindelmutter 68 zusammenwirkt, wobei die Spindelmutter 68 fest mit dem Regelelement 40 gekoppelt ist. Bei einer Drehung der Abtriebswelle 58 verlagert sich die Spindelmutter 68 entsprechend in Längsrichtung. Die Spindelmutter ist bevorzugt mit einer Spielnachstellung versehen, die bevorzugt eine Feder aufweist.

Der Antrieb der Abtriebswelle 58 erfolgt innerhalb des Getriebegehäuses 62 über eine Umlenkvorrichtung 70, die eine schräg oder senkrecht zur Längsrichtung angeordnete Antriebswelle 72 mit der Abtriebswelle 58 koppelt. Im vorliegenden Ausführungsbeispiel handelt es sich bei der Umlenkvorrichtung um ein Kegelradgetriebe 74.

An dieser Stelle sei jedoch angemerkt, dass andere Umlenkvorrichtungen denkbar sind, wobei ein Schneckentrieb, ein Planetengetriebe, ein Wellengelenk oder Vexirgelenke mit oder ohne Helikalkupplung als Beispiele zu nennen sind.

Die Führung der Abtriebswelle 58 erfolgt innerhalb eines Wellengehäuses 78, das sich zwischen dem Regelelement 40 und dem Getriebegehäuse 62 erstreckt. Mit Bezug auf die Fig. 5 wird dieser Aufbau im Detail erläutert werden.

Die Antriebswelle 72 erstreckt sich in die Armaturkomponente 14 und ist dort mit einem mechanischen oder motorisierten Stellelement verbunden, um das Regelelement 40 in Längsrichtung verlagern zu können.

Wie sich aus Fig. 4 deutlich ergibt, bilden das Regelelement 40, das Wellengehäuse 78 und das Getriebegehäuse 62 eine Einheit, die bevorzugt zentrisch innerhalb des Einlauf-Längsabschnitts bzw. des Auslauf-Längsabschnitts und damit innerhalb des Strömungskanals angeordnet ist. Aus diesem Grund ist diese Einheit möglichst strömungsoptimiert gestaltet, so dass sie einen positiven Einfluss auf das Strömungsverhalten der Luft, die die Strömungskanalkomponente 12 durchströmt, ausübt.

So dient insbesondere das Wellengehäuse 78 und das Getriebegehäuse 62 strömungsberuhigend, so dass die durch den Ringspalt strömende Luft danach möglichst reibungsarm entlang der Innenwandung des Auslauf-Längsabschnitts 22 fließt, wobei der konische Verlauf des Auslauf-Längsabschnitts 22 in Strömungsrichtung zusätzlich dafür sorgt, dass durch Reduzierung der Fließgeschwindigkeit wieder Druck aufgebaut werden kann.

Damit wird erreicht, dass der Druckabfall zwischen der Einlaufseite und der Auslaufseite der Strömungskanalkomponente 12 sehr gering ist. Der am Ringspalt auftretende Druckverlust wird im Auslauf-Längsabschnitt 22 durch die vorgenannten Maßnahmen nahezu ausgeglichen. Es findet folglich eine Druckrückgewinnung durch die gewählte Geometrie statt.

Die Einheit aus Getriebegehäuse 62, Wellengehäuse 78 und Regelelement 40 wird vorzugsweise zentrisch innerhalb des Strömungskanals, der durch den Einlauf-Längsabschnitt und den Auslauf-Längsabschnitt gebildet wird, durch ein Abstützelement 80, das die Einheit im Bereich des Getriebegehäuses 62 am Auslauf-Längsabschnitt 22 abstützt. Das Abstützelement 80 verläuft bevorzugt radial nach innen und besitzt eine strömungsoptimierte Ausgestaltung, so dass dessen Strömungswiderstand so gering wie möglich ist. Darüber hinaus kann das Abstützelement 80 durch seine Form strömungsberuhigend und richtungsgebend eingesetzt werden.

Zur Messung von Drücken bzw. Strömungsgeschwindigkeiten sind innerhalb der Strömungskanalkomponente 12 Messfühler vorgesehen. In Fig. 2 ist ein solcher Messfühler schematisch dargestellt und mit dem Bezugszeichen 85 gekennzeichnet. Dieser Messfühler 85 ist im Einlauf-Längsabschnitt vorgesehen, wobei die Position in Umfangsrichtung gesehen beliebig sein kann. Dies liegt daran, dass die Strömungsverhältnisse innerhalb des Einlauf-Längsabschnitts und damit auch die Druckverhältnisse sehr homogen sind. Das kommt daher, dass die Luft in Umfangsrichtung gleichmäßig durch den Ringspalt strömt und die Halbkugelform des Abschnitts 44 des Regelelements 40 für stabile Strömungsverhältnisse durch den Staueffekt eine gleichmäßige homogene Druckverteilung sorgt. Weitere Messfühler können innerhalb der Strömungskanalkomponente vorgesehen sein, beispielsweise im Auslauf-Längsabschnitt 22.

In Fig. 5 ist die Antriebsgruppe, die unter anderem das Regelelement 40, die Abtriebswelle 58, das Getriebegehäuse 62 und das Wellengehäuse 78 umfasst, nochmals deutlicher dargestellt. Das Wellengehäuse 78 umfasst zwei zueinander verschiebbar gehaltene Gehäuseteile 78.1 und 78.2, wobei das Gehäuseteil 78.1 mit dem Getriebegehäuse 62 und das andere Gehäuseteil 78.2 mit dem Regelelement 40, insbesondere dem Abschnitt 44, verbunden ist. Der Innen-Durchmesser des Gehäuseteils 78.2 ist größer als der Außen-Durchmesser des Gehäuseteils 78.1. Diese Dimensionierung ermöglicht das Aufschieben des Gehäuseteils 78.2 auf das Gehäuseteil 78.1. Durch diese Ausgestaltung kann sich das Gehäuseteil 78.2 in Längsrichtung relativ zum anderen Gehäuseteil 78.1 bewegen, insbesondere geführt bewegen. Für eine gute Führung der beiden Gehäuseteile 78 können bspw. Gleitleisten an einem und/oder beiden Gehäuseteilen vorgesehen sein.

Um ein Verdrehen der beiden Gehäuseteile 78 zu verhindern, sind die bereits beschriebenen Leitbleche vorgesehen, die am Gehäuseteil 78.1 angebracht sind und mit entsprechend vorgesehenen Schlitzen 56 im Gehäuseteil 78.2 zusammenwirken. Diese Schlitze 56 verlaufen in Längsrichtung und sind zum Getriebegehäuse 62 hin randoffen ausgestaltet.

Wenn das Regelelement 40 in Längsrichtung verstellt wird, bewegt sich das Gehäuseteil 78.2 ebenfalls relativ zum Gehäuseteil 78.1 und sorgt für die notwendige Führung und Verdreh-Sicherheit.

Insgesamt ergibt sich somit eine Regulierschieber-Vorrichtung, die gegenüber den bisherigen Lösungen mit deutlich geringerem Druckverlust arbeitet und damit energieeffizienter ist. Diese Energieeffizienz wird insbesondere durch die besondere Anordnung von Regelelement und Antrieb erreicht. Das Wellengehäuse 78 und das Getriebegehäuse 62 verbessern die Strömung nach dem Passieren des Ringspalts deutlich, so dass sehr schnell und innerhalb einer kurzen Strecke ein hoher Druckaufbau möglich ist. Das hat wiederum zum Ergebnis, dass die Regulierschieber-Vorrichtung kurz bauend ausgelegt werden kann.

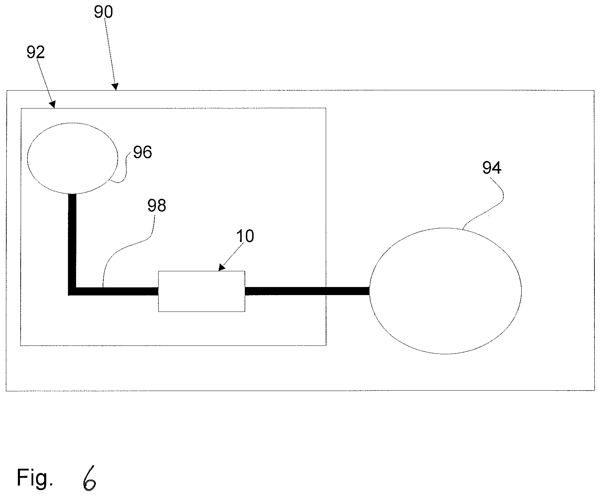

Die beschriebene Regulierschieber-Vorrichtung ist besonders gut für den Einsatz in Belüftungssystemen für Kläranlagen geeignet. In Fig. 6 ist schematisch eine Kläranlage 90 mit einem Belüftungssystem 92, das zumindest ein Verdichtersystem 96 und Rohrleitungen 98 umfasst, und einem Klärbecken 94 gezeigt. Die Regulierschieber-Vorrichtung 10 lässt sich in bestehende Rohrleitungen 98 mit relativ geringem Aufwand für die bisherigen Einrichtungen einsetzen, so dass die genannten Energieeinsparungen auch für bestehende Kläranlagen erzielbar sind. Bedingt durch die geringen Druckverluste kann das Verdichtersystem 96, das Luft in Rohrleitungen 98 einbringt, mit geringerem Ausgangsdruck und folglich mit geringerer elektrischer Leistung betrieben werden.

## Patentansprüche

1. Regulierschieber-Vorrichtung mit
einem Gehäuse, das einen von einem gasförmigen oder flüssigen Medium durchströmbaren Kanal bildet und sich gliedert in einen Einlauf-Längsabschnitt (20), einen Auslauf-Längsabschnitt (22) und einen zwischen den beiden Längsabschnitten (20, 22) liegenden weiteren Längsabschnitt (24), wobei an beiden Längsenden des Gehäuses jeweils ein Flansch (18) vorgesehen ist, so dass die Regulierschieber-Vorrichtung in eine Rohrleitung einbaubar ist;
einem verstellbaren Regelelement (40), um den Strömungsquerschnitt des Kanals zu verändern und die Durchflussmenge einzustellen, wobei die Einstellung der Durchflussmenge in dem weiteren Längsabschnitt (24) erfolgt, wobei
im Kanal ein Sitzringelement vorgesehen ist,
das Regelelement (40) einen ersten Längsabschnitt aufweist, der einen kreisförmigen Querschnitt mit in Längsrichtung variierenden Durchmessern besitzt,
das Regelelement (40) in Längsrichtung des Kanals entlang eines Verstellwegs verstellbar ist, wobei das Regelelement (40) in einer Verschluss-Position auf dem Sitzringelement (28) aufliegt und den Kanal verschließt und in einer geöffneten Position mit dem Sitzringelement (28) einen durchströmbaren Ringspalt bildet,
die variierenden Durchmesser entlang des ersten Längsabschnitts des Regelelements (40) so ausgelegt sind, dass sich die Änderung der durchströmbaren Querschnittsfläche des Ringspalts zu der Verstellung des Regelelements in Längsrichtung so verhält, dass sich der Volumenstrom durch den Ringspalt nahezu linear zu der Verstellung des Regelelements entlang des Verstellwegs verhält, und
im Einlauf-Längsabschnitt (20) Strömungsleitbleche (52) vorgesehen sind, die die Strömung konditionieren.

2. Regulierschieber-Vorrichtung nach Anspruch 1, **dadurch gekennzeichnet, dass** der Auslauf-Längsabschnitt (22) eine im Längsschnitt gesehen konische Form aufweist, derart, dass die Strömungsquerschnittsfläche des Kanals in Strömungsrichtung zunimmt.

3. Regulierschieber-Vorrichtung nach einem der vorhergehenden Ansprüche,
**dadurch gekennzeichnet, dass** das Regelelement (40) im Bereich des Einlauf-Längsabschnitts (20) angeordnet ist und zum Öffnen gegen die Strömungsrichtung verschiebbar ist.

4. Regulierschieber-Vorrichtung nach einem der vorhergehenden Ansprüche,
**dadurch gekennzeichnet, dass** das Regelelement (40) eine strömungsoptimierte Außenkontur aufweist, die einen Hohlraum umschließt, wobei in den Hohlraum ein Ende einer Abtriebswelle (58) ragt, deren anderes Ende in einem Getriebegehäuse (62) liegt, das im Auslauf-Längsabschnitt (22) angeordnet ist, und dass die äußere Form des Getriebegehäuses strömungsoptimiert ausgestaltet ist.

5. Regulierschieber-Vorrichtung nach Anspruch 4, **dadurch gekennzeichnet, dass** innerhalb des Getriebegehäuses (62) ein Winkeltrieb vorgesehen ist, um eine Antriebswelle (72), die schräg oder senkrecht zur Längsachse in das Gehäuse geführt ist, mit der Abtriebswelle (58) zu koppeln.

6. Regulierschieber-Vorrichtung nach einem der Ansprüche 4 bis 5, **dadurch gekennzeichnet, dass** die Abtriebswelle (58) innerhalb eines Gehäuses verläuft, welches sich von dem Regelelement zu dem Getriebegehäuse erstreckt.

7. Regulierschieber-Vorrichtung nach einem der Ansprüche 4 bis 6, **dadurch gekennzeichnet, dass** die Abtriebswelle innerhalb des Regelelements mit einem Umsetzelement gekoppelt ist, derart, dass eine Drehbewegung der Abtriebswelle in eine translatorische Bewegung des Regelelements umgesetzt wird.

8. Regulierschieber-Vorrichtung nach Anspruch 7, **dadurch gekennzeichnet, dass** das Umsetzelement ein Gewindespindelelement (68) umfasst.

9. Regulierschieber-Vorrichtung nach einem der Ansprüche 5 bis 8, **dadurch gekennzeichnet, dass** die Antriebswelle (70) mit einem Armaturenantrieb verbunden ist.

10. Regulierschieber-Vorrichtung nach einem der vorhergehenden Ansprüche,
**dadurch gekennzeichnet, dass** innerhalb des Einlauf-Längsabschnitts (20) zumindest ein Sensorelement vorgesehen ist.

11. Regulierschieber-Vorrichtung nach einem der vorhergehenden Ansprüche, **dadurch gekennzeichnet, dass** die Ausgestaltung des Gehäuses im Einlauf-Längsabschnitt (20) zumindest abschnittsweise an die Ausgestaltung des Regelelements (40) angepasst ist.

12. Regulierschieber-Vorrichtung nach Anspruch 11, **dadurch gekennzeichnet, dass** sich das Gehäuse im Einlauf-Längsabschnitt (20) zu dem Sitzringelement hin verjüngt.

13. Belüftungssystem für eine Kläranlage zum Eintrag von Belebungsluft in ein biologisches Klärbecken, mit einer Verdichter-Vorrichtung, und einer Belüftungsrohr-Vorrichtung, die ausgelegt ist, von der Verdichter-Vorrichtung gelieferte Belebungsluft in das Klärbecken einzutragen, **gekennzeichnet durch** eine Regulierschieber-Vorrichtung nach einem der Ansprüche 1 bis 12, die in der Belüftungsrohr-Vorrichtung vorgesehen ist, um den Massenstrom zu steuern.

## Claims

1. A regulating slide valve apparatus having
a housing which forms a duct through which a gaseous or liquid medium can flow and which has at least an inlet longitudinal portion (20), an outlet longitudinal portion (22) and a further longitudinal portion (24) arranged between bot longitudinal portions (20, 22), wherein a flange (18) is arranged on each of the two ends of the housing, so that the regulating slide valve is mountable in a pipe;
an adjustable regulating element (40) for varying the flow cross section of the duct and adjusting the through flow rate, wherein the adjustment of the through flow is achieved in the further longitudinal portion (24),
wherein
a seat ring element is provided in the duct,
the regulating element (40) has a first longitudinal portion which has a circular cross section with diameters that vary in the longitudinal direction,
the regulating element (40) is adjustable in the longitudinal direction of the duct along an adjustment travel, wherein the regulating element (40), in a closure position, lies against the seat ring element (28) and closes the duct and, in an open position, forms an annular gap, through which flow can pass, with the seat ring element (28),
the varying diameters along the first longitudinal portion of the regulating element (40) are configured such that the change in the cross-sectional area, through which flow can pass, of the annular gap with the adjustment of the regulating element (40) in the longitudinal direction is such that the volume flow through the annular gap varies approximately linearly with the adjustment of the regulating element along the adjustment travel, and
in the inlet longitudinal portion (20) flow-guiding plates (52) are provided, which condition the flow.

2. The regulating slide valve apparatus as claimed in claim 1, **characterized in that** the outlet longitudinal portion (22) has a conical shape as viewed in longitudinal section, such that the flow cross-sectional area of the duct increases in the flow direction.

3. The regulating slide valve apparatus as claimed in one of the preceding claims, **characterized in that** the regulating element (40) is arranged in the region of the inlet longitudinal portion (20) and can be moved counter to the flow direction for opening purposes.

4. The regulating slide valve apparatus as claimed in one of the preceding claims, **characterized in that** the regulating element (40) has a flow-optimized external contour which surrounds a cavity, wherein one end of an output shaft (58) projects into the cavity, the other end of which output shaft is situated in a gearing housing (62) which is arranged in the outlet longitudinal portion (22), and that the external shape of the gearing housing is of flow-optimized design.

5. The regulating slide valve apparatus as claimed in claim 4, **characterized in that**, within the gearing housing (62), there is provided an angle drive for coupling an input shaft (72), which is guided into the housing obliquely or perpendicular with respect to the longitudinal axis, to the output shaft (58).

6. The regulating slide valve apparatus as claimed in one of claims 4 to 5, **characterized in that** the output shaft (58) runs within a housing which extends from the regulating element to the gearing housing.

7. The regulating slide valve apparatus as claimed in one of claims 4 to 6, **characterized in that** the output shaft is coupled, within the regulating element, to a conversion element such that a rotational movement of the output shaft is converted into a translational movement of the regulating element.

8. The regulating slide valve apparatus as claimed in claim 7, **characterized in that** the conversion element comprises a threaded spindle element (68).

9. The regulating slide valve apparatus as claimed in one of claims 5 to 8, **characterized in that** the input shaft (70) is connected to a fitting drive.

10. The regulating slide valve apparatus as claimed in one of the preceding claims, **characterized in that** at least one sensor element is provided within the inlet longitudinal portion (20).

11. The regulating slide valve apparatus as claimed in one of the preceding claims, **characterized in that** the design of the housing in the inlet longitudinal portion (20) is adapted, at least in sections, to the design of the regulating element (40).

12. The regulating slide valve apparatus as claimed in claim 11, **characterized in that**, in the inlet longitudinal portion (20), the housing tapers toward the seat ring element.

13. An aeration system for a sewage plant for the introduction of activation air into a biological sewage basin, having a compressor apparatus and having an aeration pipe apparatus which is designed for introducing activation air delivered by the compressor apparatus into the sewage basin, **characterized by** a regulating slide valve apparatus as claimed in one of claims 1 to 12, which regulating slide valve apparatus is provided in the aeration pipe apparatus in order to control the mass flow rate.

## Revendications

1. Dispositif de vanne de régulation, comprenant :
un boîtier qui forme un canal pouvant être parcouru par un milieu gazeux ou liquide, et qui est divisé en une portion longitudinale d'entrée (20), une portion longitudinale de sortie (22) et une portion longitudinale supplémentaire (24) située entre les deux portions longitudinales (20, 22), une bride (18) étant à chaque fois prévue au niveau des deux extrémités longitudinales du boîtier, de telle sorte que le dispositif de vanne de régulation puisse être installé dans une conduite tubulaire,
un élément de régulation (40) réglable afin de modifier la section transversale d'écoulement du canal et d'ajuster la quantité de débit, l'ajustement de la quantité de débit s'effectuant dans la portion longitudinale supplémentaire (24),
un élément de siège annulaire étant prévu dans le canal,
l'élément de régulation (40) présentant une première portion longitudinale qui possède une section transversale circulaire avec des diamètres variables dans la direction longitudinale, l'élément de régulation (40) pouvant être déplacé dans la direction longitudinale du canal le long d'une voie de déplacement, l'élément de régulation (40), dans une position de fermeture, reposant sur l'élément de siège annulaire (28) et fermant le canal et, dans une position ouverte, formant avec l'élément de siège annulaire (28) une fente annulaire pouvant être parcourue par l'écoulement, les diamètres variables le long de la première portion longitudinale de l'élément de régulation (40) étant conçus de telle sorte que la variation de la surface en section transversale de la fente annulaire, pouvant être parcourue par l'écoulement, se comporte par rapport au déplacement de l'élément de réglage dans la direction longitudinale de telle sorte que le débit volumique à travers la fente annulaire se comporte pratiquement de manière linéaire par rapport au déplacement de l'élément de réglage le long de la voie de déplacement, et des tôles de guidage de l'écoulement (52) étant prévues dans la portion longitudinale d'entrée (20), lesquelles conditionnent l'écoulement.

2. Dispositif de vanne de régulation selon la revendication 1, **caractérisé en ce que** la portion longitudinale de sortie (22) présente une forme conique, vu en coupe longitudinale, de telle sorte que la surface en section transversale d'écoulement du canal augmente dans la direction d'écoulement.

3. Dispositif de vanne de régulation selon l'une quelconque des revendications précédentes, **caractérisé en ce que** l'élément de régulation (40) est disposé dans la région de la portion longitudinale d'entrée (20) et peut être déplacé pour l'ouverture à l'encontre de la direction d'écoulement.

4. Dispositif de vanne de régulation selon l'une quelconque des revendications précédentes, **caractérisé en ce que** l'élément de régulation (40) présente un contour extérieur optimisé en termes d'écoulement, qui entoure une cavité, une extrémité d'un arbre de prise de force (58) pénétrant dans la cavité, son autre extrémité étant située dans un boîtier de transmission (62) qui est disposé dans la portion longitudinale de sortie (22) et **en ce que** la forme extérieure du boîtier de transmission est configurée de manière optimisée en termes d'écoulement.

5. Dispositif de vanne de régulation selon la revendication 4, **caractérisé en ce qu'**à l'intérieur du boîtier de transmission (62) est prévu un renvoi d'angle afin d'accoupler un arbre d'entraînement (72) qui est guidé obliquement ou perpendiculairement à l'axe longitudinal dans le boîtier, à l'arbre de prise de force (58).

6. Dispositif de vanne de régulation selon l'une quelconque des revendications 4 à 5, **caractérisé en ce que** l'arbre de prise de force (58) s'étend à l'intérieur d'un boîtier qui s'étend depuis l'élément de régulation jusqu'au boîtier de transmission.

7. Dispositif de vanne de régulation selon l'une quelconque des revendications 4 à 6, **caractérisé en ce que** l'arbre de prise de force est accouplé à l'intérieur de l'élément de régulation à un élément convertisseur de telle sorte qu'un mouvement de rotation de l'arbre de prise de force soit converti en un mouvement de translation de l'élément de régulation.

8. Dispositif de vanne de régulation selon la revendication 7, **caractérisé en ce que** l'élément de convertisseur comprend un élément de broche filetée (68).

9. Dispositif de vanne de régulation selon l'une quelconque des revendications 5 à 8, **caractérisé en ce que** l'arbre d'entraînement (70) est connecté à un entraînement de robinetterie.

10. Dispositif de vanne de régulation selon l'une quelconque des revendications précédentes, **caractérisé en ce qu'**à l'intérieur de la portion longitudinale d'entrée (20) est prévu au moins un élément de capteur.

11. Dispositif de vanne de régulation selon l'une quelconque des revendications précédentes, **caractérisé en ce que** la configuration du boîtier dans la portion longitudinale d'entrée (20) est adaptée au moins en partie à la configuration de l'élément de régulation (40).

12. Dispositif de vanne de régulation selon la revendication 11, **caractérisé en ce que** le boîtier se rétrécit dans la portion longitudinale d'entrée (20) vers l'élément de siège annulaire.

13. Système d'aération pour une installation d'épuration pour l'introduction d'air atmosphérique dans un bassin d'épuration biologique, comprenant un dispositif de compresseur et un dispositif de tuyau d'aération qui est conçu pour introduire de l'air atmosphérique dans le bassin d'épuration depuis le dispositif de compresseur, **caractérisé par** un dispositif de vanne de régulation selon l'une quelconque des revendications 1 à 12, qui est prévu dans le dispositif de tuyau d'aération pour commander le débit massique.
